# EUROPEAN PATENT APPLICATION

(11) **EP 0 726 685 A2**
(43) Date of publication of application: **14.08.1996**
(21) Application number: 96101989.0
(22) Date of filing: 12.02.1996
(51) Int. Cl.: H04Q 7/22, H04L 12/56

(54) **Packet transmission method without sending serial numbers**

(30) Priority: 10.02.1995 JP 22528/95
(71) Applicant: NEC CORPORATION, Tokyo (JP)
(72) Inventor: Taketsugu, Masanori, c/o NEC corporation, Tokyo (JP)
(74) Representative: VOSSIUS & PARTNER

(57) **Abstract**

To enable data transmission without transmitting packet's serial numbers, a transmit serial number is incremented by one at a transmit site each time a data packet is sent to a receive site, and a copy of the transmitted packet is stored in a transmit memory corresponding to the transmit serial number. The process is repeated so that a predetermined number of outstanding packets are transmitted. At the receive site, a receive serial number is incremented by one upon receipt of each packet and the packet is stored in a receive memory corresponding to the receive serial number. The receive site determines whether there is an error in the outstanding packets in the receive memory. If an error is found, the receive site sends a request packet containing the serial number of the packet in error to the transmit site. In response, the transmit site sends a copy of the corrupted packet to the receive site which, in response, replaces the packet in error with the received copy. If no packet in error is found in the receive memory, the receive site transmits an acknowledgment to the transmit site. On receiving it, the transmit site repeats the transmission of the next sequence of outstanding packets.

## Description

The present invention relates generally to data communications, and more specifically to a cellular mobile communication system where mobile data terminals send and receive packets to and from cell-site stations.

Recent proliferation of personal devices for cellular mobile communication networks have created a need to communicate computer data over radio links in a packet-switched mode, rather than in a circuit-switched mode, for efficient utilization of network resources. In data communication systems, the international standard X.25 specifies that three-bit serial numbers be contained in each data packet to indicate the transmit and receive sequences together with a format identifier and a logical channel number and so forth. According to the X.25 standard, a predetermined number of data packets are transmitted in sequence from a transmit site to a receive site. These packets are called "outstanding" because the transmit site receives no acknowledgment during the transmission of these packets. If the receive site fails to receive any of the outstanding packets, it returns no acknowledgment. Following the transmission of all outstanding packets, the transmit site begins a timing operation. If no acknowledgment is received within the period of the timing operation, the transmit site determines that an error has occurred in the transmitted packets, and retransmits their copies although not all of the previous packets have been corrupted.

If the protocols of the current standard for packet switched network are employed, the throughput of a connection established in the cellular network will be significantly low due to the relatively low transmission speed of the radio link Another factor that would affect the throughput is the amount of data contained in the packet header since powerful error control bits would be needed to ensure against the loss of any single bit. Furthermore, the conventional retransmission scheme would increase radio traffic and hence place further limitations on the throughput. It is thus important to reduce the amount of housekeeping data in the packet header.

It is therefore an object of the present invention to provide a data communication method that enables a high throughput over low-speed communications links by not transmitting serial numbers which are conventionally used to establish the identity of transmitted packets.

According to a first aspect of the present invention, there is provided a method for transmitting data packets from a transmit site to a receive site without containing serial numbers of the data packets, comprising the steps of:
a) transmitting a data packet from the transmit site to the receive site, incrementing a serial number by 1 at the transmit site and storing a copy of the transmitted data packet in a storage location of a transmit memory corresponding to the serial number;
b) repeating the step (a) a predetermined number of times;
c) receiving each data packet of the step (a) at the receive site, incrementing a serial number by 1 and storing the received data packet in a storage location of a receive memory corresponding to the serial number; and
d) repeating the step (c) the same predetermined number of times as the step (b).

Preferably, following the step (d), the present invention provides the steps of:
e) determining whether there is a data packet in error in the receive memory;
f) if a data packet in error is found by the step (e), transmitting a request packet containing the serial number of the packet in error from the receive site to the transmit site;
g) receiving the request packet at the transmit site and transmitting to the receive site a copy of the data packet stored in the transmit memory in a location identified by the serial number contained in the request packet;
h) receiving the copy of data packet at the receive site and replacing the packet in error stored in the receive memory with the received copy and repeating the step (e);
i) if a data packet in error is not found by the step (e), transmitting an acknowledging packet from the receive site to the transmit site; and
j) repeating the steps (a) to (i).

According to a second aspect of the present invention, there is provided a method for transmitting data packers from a transmit site to a receive site without containing serial numbers of the data packets, comprising the steps of:
a) setting a first transmit variable to 0 at the transmit site and setting a first receive variable to 0 at the receive site;
b) setting a second transmit variable to 0 at the transmit site;
c) transmitting a data packet from the transmit site to the receive site, incrementing the second variable by 1 and storing a copy of the transmitted data packet in a storage location of a transmit memory corresponding to a sum of the first and second transmit variables;
d) repeating the step (c) a predetermined number of times and incrementing the first transmit variable by an amount corresponding to predetermined number;
e) setting a second receive variable to 0 at the receive site;
f) receiving each data packet of the step (c) at the receive site, incrementing the second receive variable by 1 and storing the received data packet in a storage location of a receive memory corresponding to a sum of the first and second receive variables;
g) repeating the step (f) said predetermined number of times and incrementing the first receive variable by an amount corresponding to the same predetermined number as that of the step (d).

Preferably, following the step (g), the present invention provides the steps of:
j) determining whether there is a data packet in error in the receive memory;
k) if a data packet in error is found by the step (j), transmitting a request packet containing a sum of the first and second receive variables from the receive site to the transmit site;
l) receiving the request packet at the transmit site and transmitting to the receive site a copy of the data packet stored in the transmit memory in a location identified by the sum contained in the request packet;
m) receiving the copy of data packet at the receive site and replacing the packet in error stored in the receive memory with the received copy and repeating the step (j);
n) if a data packet in error is not found by the step (j), transmitting an acknowledging packet from the receive site to the transmit site; and
o) receiving the acknowledgment packet at the transmit site and repeating the steps (b) to (h).

The present invention will be described in further detail with reference to the accompanying drawings, in which:
Fig. 1 is a block diagram of a cell-site station of a mobile communication network;
Fig. 2 is a block diagram of a mobile station of the mobile communication network;
Fig. 3 shows the data format of packets used in the network;
Fig. 4 is a flowchart of operations performed by the controller of the cell-site station;
Fig. 5 is a flowchart of operations performed by the controller of the mobile station; and
Fig. 6 is a sequence diagram illustrating a sequence of packets exchanged between transmit and receive sites.

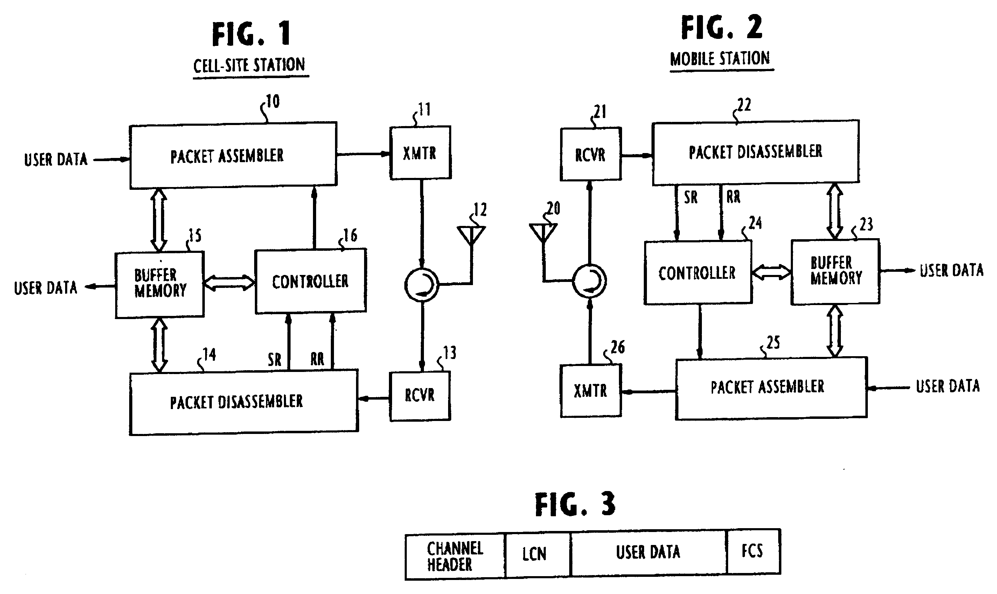

In Fig. 1, there is shown a cell-site station of a cellular mobile communication system according to the present invention. The cell-site base station includes a packet assembler 10 where user data are assembled into a packet and applied to a transmitter 11 where it is converted to a radio frequency signal for transmission on a forward channel from antenna 12 to a mobile station. A copy of the transmitted packet is stored in a buffer memory 15 for retransmission in the event of an error. Signals on a reverse channel from the mobile station are received by antenna 12, converted to baseband by receiver 13 and supplied to a packet disassembler 14 where each packet is disassembled. Controller 16 provides memory management on buffer memory 15 so that copies of user data transmitted are stored in sequence for purposes of retransmission and provides an error check on the mobile-transmitted user data. If a bit error exists, it directs the packet assembler 10 to send a return message indicating the serial number of a packet in error, otherwise it directs the packet assembler to acknowledge receipt of a sequence of packets by sending to the mobile station a "receive ready" packet. At appropriate timing, the mobile-transmitted user data in memory 15 are read out into utilization circuitry, not shown. Controller 16 includes error checking circuitry, not shown, to check for the presence of any packet in memory 15 which has been corrupted during transmission.

As shown in Fig. 2, the cellsite-transmitted signal is received by antenna 20 of a mobile station and converted to baseband by a receiver 21 and fed to a packet disassembler 22 where the packet is disassembled and its contents are analyzed. The user data contained in the disassembled packet is stored into a buffer memory 23 under control of a controller 24. A utilization circuit, not shown, is connected to the buffer memory 23 to read user data therefrom at appropriate timing. User data from mobile station is applied to a packet assembler 25 where it is assembled into a packet. The packet from the mobile station is converted to radio frequency by a transmitter 26 and transmitted from antenna 20 to the cell-site station. Controller 24 provides memory management on buffer memory 23 so that copies of mobile-transmitted user data are stored in sequence for purposes of retransmission and provides an error check on the cellsite-transmitted user data. If a bit error exists in a predetermined number of cellsite-transmitted packets, controller 24 directs the packet assembler 25 to send a return message (selective ready packet) indicating the serial number of a damaged packet, otherwise it directs the packet assembler 25 to acknowledge receipt of a sequence of packets. Controller 24 includes error checking circuitry, not shown, to check for the presence of any packet in memory 23 which has been corrupted during transmission.

As shown in Fig. 3, the packet transmitted over the forward and reverse channels of the cellular network contains a channel header, a logical channel number field, a user data field and a frame check sequence. User data is inserted in the user data field. No serial number is transmitted by packets. Packet assemblers at both cell-site and mobile stations provide assembling of a data packet according to the format of Fig. 3, and packet disassemblers of both stations provide disassembling of a received packet into constituent components for channel identification and error check.

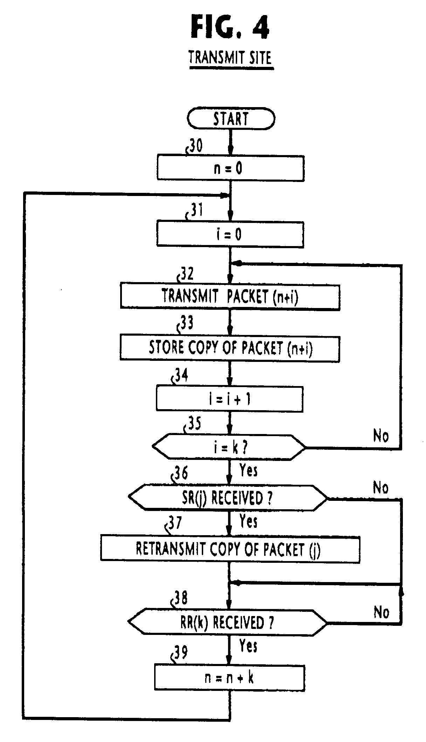

The operation of controller 16 at cell-site station during a transmit mode is illustrated in Fig. 4. When transmitting data traffic to a mobile station, a first variable *n* is set to 0 at block 30 and a second variable *i* is set to 0 at block 31. A sum of the variables *n* + *i* indicates the serial number of a data packet sent to the mobile station. Controller 16 commands the packet assembler 10 to assemble and transmit a data packet (block 32) and stores a copy of the transmitted packet into the buffer memory 15 (block 33) in a storage location identified by the serial number *n* + *i*. Variable *i* is incremented by 1 at block 34 and is checked at block 35 to see if it is equal to *k*, (where *k* is the maximum number of outstanding packets waiting to be acknowledged). If *i* is not equal to *k*, flow returns to block 32 to transmit the next packet. These *k* outstanding packets are sequentially transmitted at periodic intervals to the mobile station and copies of the corresponding packets are stored in memory 15.

Flow proceeds to block 36 to check for the presence of a selective receive packet SR(j) from the mobile station, requesting retransmission of packet (j) which has been corrupted during transmission, where j identifies the serial number of the packet in error. If the decision is affirmative at block 36, flow proceeds to block 37 to fetch the copy of the requested packet from the location of memory 15 identified by the serial number contained in the requesting packet, and transmit it to the mobile station. Following block 37 or negative decision of block 36, decision block 38 is executed to check for the presence of a receive ready packet RR(k) from the mobile station, acknowledging receipt of a sequence of *k* packets and signaling that the mobile station is ready to accept the next sequence. If the acknowledging packet is received, flow proceeds from block 38 to block 39 to set the variable *n* equal to *n* + *k* and returns to block 31 to start sending the next sequence of *k* packets.

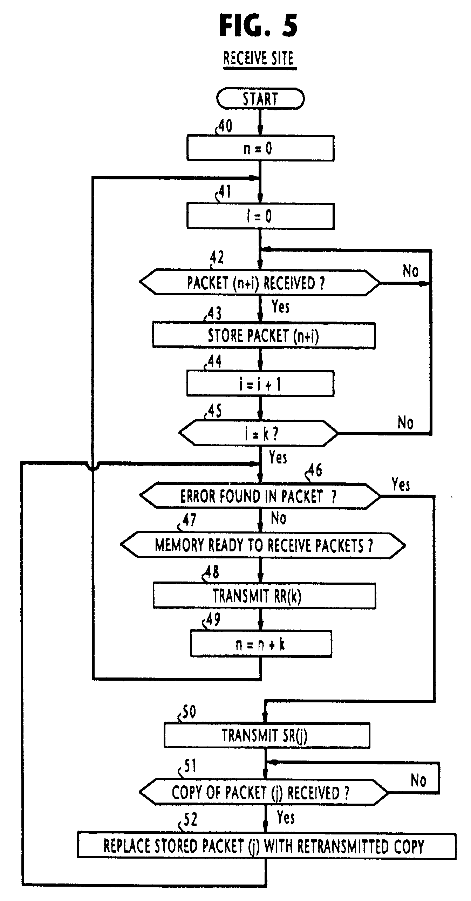

The operation of controller 24 at mobile station during a receive mode is illustrated in Fig. 5. When receiving a data packet from the cell-site station, variables *n* and *i* are sequentially set to 0 at blocks 40 and 41. At block 42, controller 24 checks for the presence of a data packet from the mobile station. If there is one, flow proceeds from block 42 to block 43 to store the received packet in the buffer memory 23 and variable *i* is incremented by 1 (block 44). A test is then made at block 45 to see if *k* packets have been received. If not, flow returns to block 42 to repeat the process until *k* packets are received. When *k* packets are received in sequence, flow proceeds from block 45 to block 46, where the controller 24 checks to see if there is a stored packet in error. If the decision at block 46 is negative, flow proceeds to block 47 to determine whether the memory 23 is ready to receive the next sequence of packets and if so it proceeds to block 48 to transmit an RR(k) packet to acknowledge the receipt of *k* packets. Controller 24 sets the variable *n* equal to *n* + *k* at block 49 and returns to block 41 to repeat the above process for the next sequence.

If there is a corrupted packet (j) in memory 23, the decision at block 46 is affirmative and flow proceeds to block 50 where the controller 24 sends a selective reject packet SR(j) to the cell-site station. If a copy of the packet (j) is received (block 51), flow proceeds to block 52 to replace the stored packet (j) with the received copy of the packet (j), and flow proceeds to block 46 to provide an error check on the retransmitted packet.

When user data is transmitted on a reverse channel, the mobile station performs the process of Fig. 4 and the cell-site station performs the process of Fig. 5.

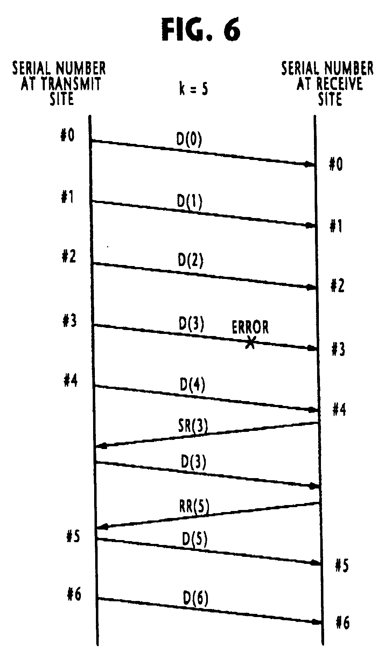

Assume that *k* = 5, and the cell-site station transmits data packets starting with D(0). The mobile station increments the serial number represented by the sum of variables *n* and *i* in response to packets D(0) to D(4) as illustrated in Fig. 6. The serial numbers of both transmit and receive sites are incremented synchronously from #0 to #4. If data packet D(3) is corrupted during transmission, an error check at controller 24 results in the transmission of a packet SR(3) after the variable *i* becomes equal to 5 at block 35 on receipt of packet D(4). On receiving packet SR(3) following the execution of block 35, the cell-site station retransmits packet D(3). In response, the mobile station sends an RR(5) packet and the cell-site station responds to it by setting its variable *n* to 5 at block 39 and returns to block 41 to start sending the next sequence of data packets.

## Claims

1. A method for transmitting data packets from a transmit site to a receive site without containing serial numbers of the data packets, comprising the steps of:
a) transmitting a data packet from the transmit site to the receive site, incrementing a serial number by 1 at the transmit site and storing a copy of the transmitted data packet in a storage location of a transmit memory corresponding to the serial number;
b) repeating the step (a) a predetermined number of times;
c) receiving each data packet of the step (a) at the receive site, incrementing a serial number by 1 and storing the received data packet in a storage location of a receive memory corresponding to the serial number; and
d) repeating the step (c) said predetermined number of times.

2. A method as claimed in claim 1, following the step (d), further comprising the steps of:
e) determining whether there is a data packet in error in the receive memory;
f) if a data packet in error is found by the step (e), transmitting a request packet containing the serial number of the packet in error from the receive site to the transmit site;
g) receiving the request packet at the transmit site and transmitting to the receive site a copy of the data packet stored in the transmit memory in a location identified by the serial number contained in the request packet;
h) receiving the copy of data packet at the receive site and replacing the packet in error stored in the receive memory with the received copy and repeating the step (e);
i) if a data packet in error is not found by the step (e), transmitting an acknowledging packet from the receive site to the transmit site; and
j) repeating the steps (a) to (i).

3. A method as claimed in claim 1 or 2, wherein the transmit and receive sites are located in a cellular mobile communication network.

4. A method for transmitting data packets from a transmit site to a receive site without containing serial numbers of the data packets, comprising the steps of:
a) setting a first transmit variable to 0 at the transmit site and setting a first receive variable to 0 at the receive site;
b) setting a second transmit variable to 0 at the transmit site;
c) transmitting a data packet from the transmit site to the receive site, incrementing the second variable by 1 and storing a copy of the transmitted data packet in a storage location of a transmit memory corresponding to a sum of the first and second transmit variables;
d) repeating the step (c) a predetermined number of times and incrementing the first transmit variable by an amount corresponding to said predetermined number;
e) setting a second receive variable to 0 at the receive site;
f) receiving each data packet of the step (c) at the receive site, incrementing the second receive variable by 1 and storing the received data packet in a storage location of a receive memory corresponding to a sum of the first and second receive variables; and
g) repeating the step (f) said predetermined number of times and incrementing the first receive variable by an amount corresponding to said predetermined number.

5. A method as claimed in claim 4, following the step (g), further comprising the steps of:
h) transmitting an acknowledgment packet from the receive site to the transmit site if no error exists in the packets stored in the receive memory; and
i) receiving the acknowledgment packet at the transmit site and repeating the steps (b) to (h).

6. A method as claimed in claim 4 or 5, following the step (g), further comprising the steps of:
j) determining whether there is a data packet in error in the receive memory;
k) if a data packet in error is found by the step (j), transmitting a request packet containing a sum of said first and second receive variables from the receive site to the transmit site;
l) receiving the request packet at the transmit site and transmitting to the receive site a copy of the data packet stored in the transmit memory in a location identified by said sum contained in the request packet;
m) receiving the copy of data packet at the receive site and replacing the packet in error stored in the receive memory with the received copy and repeating the step (j);
n) if a data packet in error is not found by the step (j), transmitting an acknowledging packet from the receive site to the transmit site; and
o) receiving the acknowledgment packet at the transmit site and repeating the steps (b) to (g).

7. A method as claimed in claim 4, 5, or 6, whrein the transmit and receive sites are located in a cellular mobile communication network.
